# EUROPÄISCHE PATENTSCHRIFT

(11) **EP 0 636 815 B1**
(45) Veröffentlichungstag und Bekanntmachung des Hinweises auf die Patenterteilung: **26.03.1997**
(21) Anmeldenummer: 94111437.3
(22) Anmeldetag: 22.07.1994
(51) Int. Cl.: F16H 7/12, F16F 7/04

(54) **Vorrichtung zum Spannen von Treibriemen**
Transmission belt tensioning device
Dispositif de tension d'une courroie de transmission

(30) Priorität: 29.07.1993 DE 4325424
(43) Veröffentlichungstag der Anmeldung: 01.02.1995
(73) Patentinhaber: Continental Aktiengesellschaft, 30165 Hannover (DE)
(72) Erfinder: Bonkowski, Dipl.-Ing., D-30165 Hannover (DE); Nessel, Dipl.-Ing. Andreas, D-30167 Hannover (DE)

(56) Entgegenhaltungen:
- EP-A- 0 362 619
- EP-A- 0 364 277
- DE-A- 2 455 385
- DE-A- 4 124 636
- DE-C- 4 125 494
- US-A- 4 689 037

## Beschreibung

Die Erfindung betrifft eine Vorrichtung zum Spannen von Treibriemen oder Antriebsketten mit einer auf Verdrehung vorgespannten Schraubenfeder zum Anpressen eines in einem Gehäuse auf einer Drehachse drehbar gelagerten Spannhebels gegen den Riemen oder die Kette und mit einer Dämpfungsanordnung, die bei Schwenkbewegungen des Spannhebels wirksam wird, wobei ein auf einem nasenförmigen Lagerteil des Spannhebels drehfest, aber axial verschiebbar angeordneter Reibkörper um die Drehachse verdreht wird und axial gegen das feststehende Gehäuse von der Schraubenfeder gepreßt wird.

Aus der DE 40 10 928 A1 ist eine Vorrichtung zum Spannen von Treibriemen bekannt. Diese Spannvorrichtung weist einen um die Drehachse eines stationären Gehäuses drehbaren Spannhebel auf. Mit dem Gehäuse ist eine Reibungsbuchse verbunden, auf der unter Erzeugung einer Gleitreibung eine um die Drehachse drehbare Federbuchse angeordnet ist. Eine Schraubenfeder umgibt die Federbuchse und die Reibungsbuchse. Ein Ende der Schraubenfeder ist am Gehäuse und das andere Ende an dem Spannhebel gesichert. Die Schraubenfeder liegt in einem axialen Bereich unter Erzeugung einer Reibungskraft zwischen der Federbuchse und der Reibungsbuchse gegen die Federbuchse an.

Mit dieser Spannvorrichtung, die eine permanent wirkende Dämpfungsanordnung aufweist, sollen Riemenschwingungen, die zu Schlupf und entsprechenden Schlupfgeräuschen führen, wirksam gedämpft werden. Dazu sind relativ hohe Dämpfungsmomente aufzubringen, da sonst die Spannhebelbewegungen bei dynamischem Betrieb nicht ausreichend minimiert werden.

Das Funktionsprinzip der beschriebenen Dämpfungsanordnung basiert auf der Erzeugung einer radial in Umfangsrichtung umgesetzten Schlingkraft, die sich aus der Durchmesserreduzierung der Spannfeder bei deren Vorspannung ergibt. Da einerseits diese Durchmesserveränderung im Vergleich zu den Durchmessertoleranzen handelsüblicher Schraubenfedern relativ gering sind, sich andererseits jedoch bereits bei geringen Durchmesserabweichungen vom angestrebten Wert die Schlingkraft stark verändert, sind wesentliche Schwankungen im Dämpfungsverhalten einzelner Spannvorrichtungen zu erwarten. Dies führt zu Problemen bei der Reproduzierbarkeit der Dämpfung, insbesondere bei Serienfertigung, bzw. zur kostenintensiven Einengung der zulässigen Durchmessertoleranz der Feder.

Außerdem bedingt das bekannte Funktionsprinzip eine unerwünschte Abnahme der Dämpfung über die Lebensdauer, da sich durch die betriebszeitabhängige Längung des Riemens die Arbeitsposition des Spannhebels derart verschiebt, daß sich die Federvorspannung und damit auch die Schlingkraft entsprechend reduziert. Dieser Effekt wird durch den bei Reibungsdämpfung unvermeidbaren Verschleiß und der damit verbundenen Durchmesserveränderung der Federbuchse aus o.a. Gründen noch verstärkt.

Aus der DE 39 29 753 C1 ist eine Riemenspannvorrichtung bekannt, die eine Bremsanordnung mit einem mittels einer Einwegkupplung an den Schwenkarm ankuppelbaren Bremselement aufweist. Die Bremsanordnung ist auf ein konstantes Bremsmoment eingestellt, das größer ist als das am Schwenkarm wirksame Moment der Spannfeder. Dabei wird das Bremselement von einer flachen, axial eingespannten Bremsscheibe gebildet.

Aus der EP 0 362 619 A1 und der EP 0 361 899 A1 sind Riemenspannvorrichtungen mit einer ersten schrauben- oder spiralförmigen Spannfeder bekannt. Diese Spannfeder ist angeordnet, um den Spannhebel gegen den Riemen zu verschwenken. Weiter ist eine von der Spannfeder separate zweite Feder vorgesehen, die durch ihre axiale Anpreßwirkung auf einen ringförmigen Reibkörper zu einer konstanten Dämpfung führt.

Aus der DE 41 24 636 A1 ist eine Riemenspannvorrichtung bekannt, bei der die Spannfeder gleichzeitig die Axialkraft zur Beaufschlagung des Reibkörpers erzeugt. Aufgrund des unvermeidbaren Verschleisses des Reibkörpers wird der Spannhebel mit der Spannrolle entsprechend der Größe des Verschleisses aus der Riementriebebene axial auswandern, was einen nicht fluchtenden Verlauf des Riementriebes zur Folge hat. Außerdem ist die Reibarbeit und damit die Dämpfung noch nicht für alle Einsatzfälle ausreichend.

Aus der US 4 689 037 ist eine Riemenspannvorrichtung (gemäß dem Oberbegriff des 1 Anspruchs) bekannt, bei der die Spannfeder ebenfalls gleichzeitig die Axialkraft zur Beaufschlagung eines Reibkörperpaketes erzeugt. Durch diese axiale Federbelastung wird der Spannhebel aufgrund von Lagertoleranzen und Verschleiß axial verschoben. Dieses führt ebenfalls zu einem axialen Auswandern der Spannrolle aus der Riementriebebene, was zu den vorstehend beschriebenen technischen Problemen führt.

Der Erfindung liegt die Aufgabe zugrunde, eine Spannvorrichtung der eingangs beschriebenen Art zu schaffen, die eine ausreichend hohe und in allen Arbeitsbereichen konstante Dämpfung zur Schwingungsunterdrückung des Spannhebels realisiert und sich gleichzeitig hinsichtlich der Reproduzierbarkeit der Dämpfung und des Verschleißverhaltens unkritisch verhält.

Die Aufgabe wird erfindungsgemäß durch die im Kennzeichen des Anspruchs 1 genannten Merkmale gelöst.

Der nicht elastische Reibkörper liegt mit seiner axialen Außenseite, die eine äußere Reibfläche darstellt, am feststehenden Gehäuse an. Die vom Reibkörper bedeckte Fläche des Gehäuses dient als Reibfläche. Auf seiner anderen axialen Seite ist der Reibkörper mit dem gegenüber dem Gehäuse verdrehsicher angeordneten Gegenreibring flächig beaufschlagt, so daß sich durch Verdrehen des Reibkörpers eine Relativbewegung zu Gehäuse und Gegenreibring ergibt. Infolge der axialen Vorspannung der Schraubenfeder wird der Reibkörper zwischen dem axial verschiebbaren Gegenreibring und dem Gehäuse eingespannt. Da der Reibkörper durch die drehfeste Anordnung mit dem Spannhebel verbunden ist und sich somit mit dem Spannhebel bewegt, wirkt das Reibmoment, das an den zwei beschriebenen Reibflächen entsteht, in allen Betriebszuständen den Bewegungen des Spannhebels entgegen, so daß auch extrem kurze Stöße bzw. hochfrequente Schwingungen wirksam gedämpft werden.

Da durch die oben beschriebene Konstruktion am Reibkörper beidseitig Reibungsverluste entstehen, kann eine ausreichend hohe Dämpfung erzeugt werden, wobei die Dämpfungswerte durch Variation der axialen Vorspannung der Schraubenfeder problemlos zu beeinflussen sind. Da die axiale Vorspannung der Schraubenfeder unabhängig von der Betriebsposition des Spannhebels ist, wirkt in allen Betriebspositionen des Spannhebels annähernd die gleiche Dämpfung.

Außerdem ist durch die axiale Verschiebbarkeit des Gegenreibringes mittels der Schraubenfeder ein Verschleißausgleich gegeben. Der Verschleiß des Reibkörpers wird dabei innerhalb des Spannsystems kompensiert, wobei ein axiales Auswandern des Spannhebels mit der Spannrolle vermieden wird.

Infolge der flachen Federkennlinie der Schraubenfeder in axialer Vorspannrichtung ergibt sich durch betriebsbedingten Verschleiß am Reibkörper nur ein geringfügiger Abfall der Andruckkraft, so daß die Dämpfung über die Lebensdauer des Spannsystems praktisch konstant bleibt.

In vorteilhafter Ausgestaltung der Erfindung ist eine Ausnehmung des Reibkörpers in einem konzentrischen Führungsansatz des Reibkörpers ausgebildet. Die drehfeste, formschlüssige Verbindung mit dem nabenförmigen Lagerteil ist dadurch über eine größere Länge möglich.

Eine vorteilhafte Ausgestaltung der Erfindung wird im Anspruch 3 gekennzeichnet. Der Federschenkel ragt durch den Schlitz des Gegenreibringes und sichert die Schraubenfeder und gleichzeitig den Gegenreibring gegen Verdrehung gegenüber dem Gehäuse.

Eine weitere vorteilhafte Ausgestaltung der Erfindung wird im Anspruch 4 gekennzeichnet. Die Lasche am Gegenreibring wird im Bereich des Federschenkels in der Gehäuseöffnung verklemmt und bewirkt eine einfache und wirkungsvolle Verdrehsicherung des Gegenreibringes.

Eine weitere vorteilhafte Ausgestaltung der Erfindung wird im Anspruch 5 gekennzeichnet. Bei dieser Ausbildung wird der Gegenreibring mit seinem Außenumfang im Gehäuse radial gelagert.

In weiterer vorteilhafter Ausgestaltung der Erfindung ist der Gegenreibring mit Spiel im Gehäuse und zu einem Führungsansatz angeordnet. Durch die radiale Abstützung des Schenkels der Schraubenfeder wird der Gegenreibring exzentrisch gegen den Führungsansatz gepreßt. Von der Abstützstelle des Schenkels wird zusätzlich eine radiale Kraft reibungserhöhend eingeleitet.

Eine weitere vorteilhafte Ausgestaltung der Erfindung wird im Anspruch 7 gekennzeichnet. Durch einen sich zwischen Schraubenfeder und Gegenreibring befindenden Schraubenring wird die Wicklungssteigung der Schraubenfeder kompensiert. Dadurch kommt die entsprechende Anfangswindung der Schraubenfeder auf ihrem gesamten Umfang zur gleichmäßigen axialen Anlage, so daß eine optimale axiale Krafteinleitung ohne Verkanten auf dem Gegenreibring und über diesen auf den Reibkörper gegeben ist.

Wird die Spannvorrichtung gemäß den Merkmalen des Anspruchs 8 ausgebildet, wird eine Relativbewegung zwischen dem Reibkörper und dem Spannhebel in Umfangsrichtung zugelassen, so daß bei geringen Schwingungsamplituden des Spannhebels die Mitnehmer innerhalb der Ausnehmungen schwingen, ohne den Reibkörper zu bewegen. Das Spannsystem arbeitet dann mit einer relativ geringen Dämpfung. Erst bei größeren Amplituden, die zu entsprechenden Drehbewegungen des nabenförmigen Lagerteils führen, wird der Reibkörper durch die Mitnehmer ab eines definierten Schwenkwinkels angekoppelt und bringt damit ein zusätzlich abbremsend wirkendes Moment auf den Spannhebel auf.

Durch die Ausbildung gemäß Anspruch 9 wird ein elastomerer Körper in den Freigang zwischen Mitnehmer und Ausnehmung des Reibkörpers zur Reduzierung der stoßartigen Belastung auf die entsprechenden Körperflanken erzielt.

Durch die Erfindung wird eine Spannvorrichtung mit einer Dämpfungsanordnung geschaffen, die bei kompakter Bauform relativ hohe Reibmomente aufweist. Die Schraubenfeder verspannt den Gegenreibring, den Reibkörper und die Gehäusefläche axial gegeneinander. Dadurch ergibt sich die erforderliche Verspannung der Reibflächen gegeneinander. Außerdem können Fertigungstoleranzen und auftretender Verschleiß ausgeglichen werden. Die erfindungsgemäße Anordnung und Beaufschlagung des Reibkörpers ermöglicht eine Vergrößerung der wirksamen Reibfläche, da der Reibkörper zwei Reibflächenpaare, eines mit dem Gehäuse und das andere mit der Bodenfläche des Gegenreibringes bildet. Außerdem bietet die in der Erfindung realisierte Dämpfungsanordnung den Vorteil eines nahezu konstanten Dämpfungsmoments in allen Betriebspositionen des Spannhebels sowie eine Verschleißnachführung.

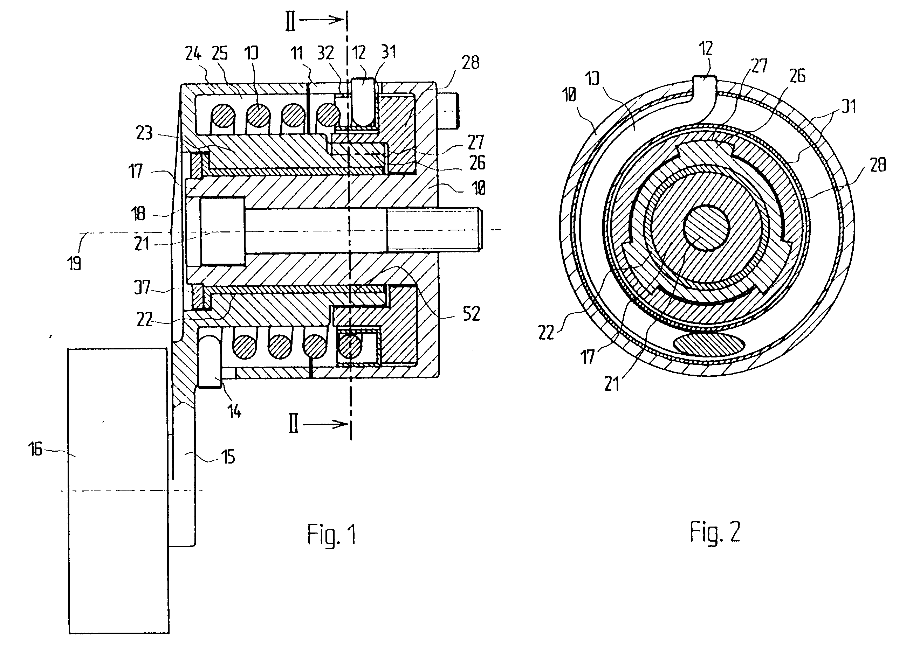

Anhand der Zeichnung werden nachstehend vier Ausführungsbeispiele der Erfindung näher erläutert. Es zeigt
- Fig. 1: eine Spannvorrichtung mit richtungsunabhängiger Reibungsdämpfung im Schnitt,
- Fig. 2: einen Querschnitt durch den Reibungsdämpfer gemäß Linie II-II in Fig. 1,
- Fig. 3: eine Seitenansicht des Gegenreibrings aus Fig. 1 und 2 in Einzelteildarstellung,
- Fig. 4: ein Schnitt durch den Gegenreibring aus Fig. 3 gemäß Linie IV-IV,
- Fig. 5: eine modifizierte Ausführungsform des Gegenreibrings in der Draufsicht,
- Fig. 6: einen Schnitt gemäß Linie VI-VI durch den Gegenreibring aus Fig. 5,
- Fig. 7: eine modifizierte Ausführungsform der Spannvorrichtung im Schnitt,
- Fig. 8: einen Schnitt durch den Reibungsdämpfer aus Fig. 7 gemäß Linie VIII-VIII,
- Fig. 9: einen Distanzring aus Fig. 7 und 8 in Einzelteildarstellung in perspektivischer Ansicht,
- Fig. 10: eine weitere modifizierte Ausführungsform der Spannvorrichtung im Schnitt,
- Fig. 11: einen Schnitt durch den Reibungsdämpfer aus Fig. 10 gemäß Linie XI-XI.

Ein feststehendes Gehäuse 10 weist ein achsparalleles Langloch 11 auf, in dem ein Schenkel 12 einer Schraubenfeder 13 drehfest angeordnet ist, die mit ihrem anderen Schenkel 14 an einem Spannhebel 15 befestigt ist. Aufgrund der Federvorspannung in Verdrehrichtung wird die am Spannhebel 15 befestigte Spannrolle 16 in Richtung auf den hier nicht gezeigten Riementrieb kraftbeaufschlagt.

Der Spannhebel 15 ist auf einem Lagerzapfen 17 des Gehäuses 10 über eine Gleitbuchse 22, die im nabenförmigen Lagerteil 23 angeordnet ist, gelagert. Eine Zentralbohrung 18 des Lagerzapfens 17 liegt in der Drehachse 19 und nimmt eine Befestigungsschraube 21 auf, mit der das Gehäuse 10 z.B. an einem Motorgehäuse befestigt ist.

Das drehbare Lagerteil 23 des Spannhebels 15 wird von einem konzentrischen Abdeckmantel 24 beabstandet umgeben. Zwischen beiden liegt so ein rohrförmiger Raum 25, in dem die Schraubenfeder 13 vorgespannt eingesetzt ist.

Das Lagerteil 23 des Spannhebels 15 weist an seinem stirnseitigen Ende drei radial hervorragende Mitnehmer 26 auf, die formschlüssig in entsprechende Ausnehmungen 27 eines festen Reibkörpers 28 eingreifen. Die Ausnehmungen 27 liegen konzentrisch zur Drehachse 19 im Führungsansatz 51 des Reibkörpers 28. Der Reibkörper 28 weist eine Mittelbohrung 29 auf und ist über den feststehenden Lagerzapfen 17 geschoben.

Ein drehfest am Gehäuse 10 gehaltener Gegenreibring 31 wird mit seinem Boden auf den Reibkörper 28 gepreßt, da er von der Axialkraft der vorgespannten Schraubenfeder 13 beaufschlagt ist. Der Schenkel 12 ist im Langloch 11 mit achsparallelem Spiel eingesetzt, das die axiale Verschiebbarkeit gewährleistet.

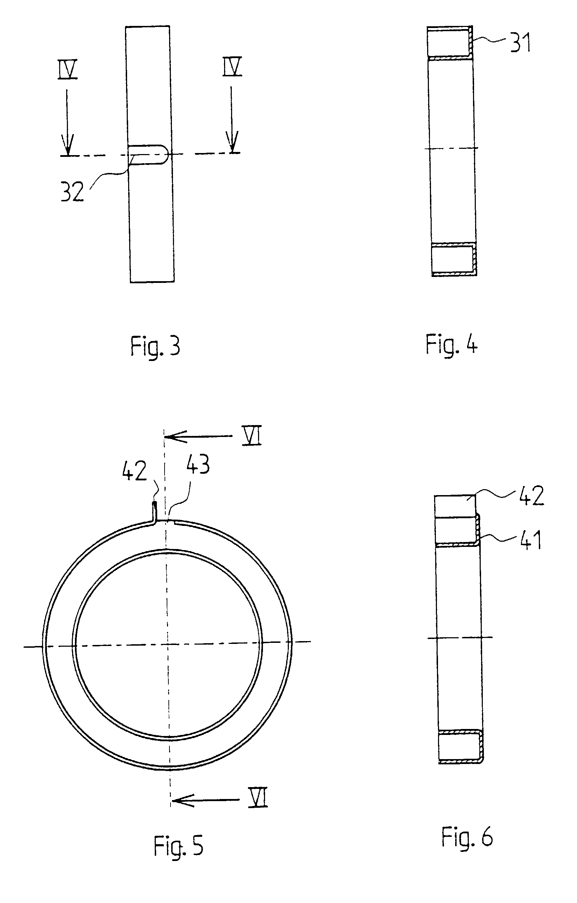

Die Schraubenfeder 13 ragt mit ihrem gehäuseseitigen Schenkel 12 durch einen Schlitz 32 des Gegenreibringes 31 in das Langloch 11 des Gehäuses 10. Aus den Fig. 3 und 4 wird der Aufbau des Gegenreibringes 31 deutlich. Der Seitenschnitt entspricht einem U-förmigen Ring.

Das drehbare Lagerteil 23 des Spannhebels 15 ist durch eine mit dem Lagerzapfen 17 des Gehäuses 10 fest verbundene Sicherungsscheibe 37 in seiner axialen Lage fixiert, wobei durch die Druckkraft der Schraubenfeder 13 das Lagerteil 23 mit dem Bund der Gleitbuchse 22 an der Sicherungsscheibe 37 anliegt.

Bei Drehung des Lagerteils 23 wird der Reibkörper 28 über die Mitnehmer 26 relativ zum in Umfangsrichtung feststehenden Gegenreibring 31 und der feststehenden Gehäusefläche verdreht. Die Schraubenfeder 13 drückt den im Gehäuse 10 axial geführten Gegenreibring 31, den Distanzring 53, den Reibkörper 28 und die Gehäusefläche 10 axial aufeinander. Dadurch ergibt sich die erforderliche Verspannung der Reibflächen gegeneinander, und außerdem können Fertigungstoleranzen und evtl. auftretender Verschleiß ausgeglichen werden. Durch die auftretende Reibung werden die Auslenkungen des Spannhebels 15 gedämpft.

Der in Fig. 5 und 6 dargestellte Gegenreibring 41 weist eine radial nach außen ragende Lasche 42 auf, die eine Seite eines Schlitzes 43 begrenzt. Diese Lasche 42 stellt eine einfache, direkte Verdrehsicherung für den Gegenreibring 41 dar.

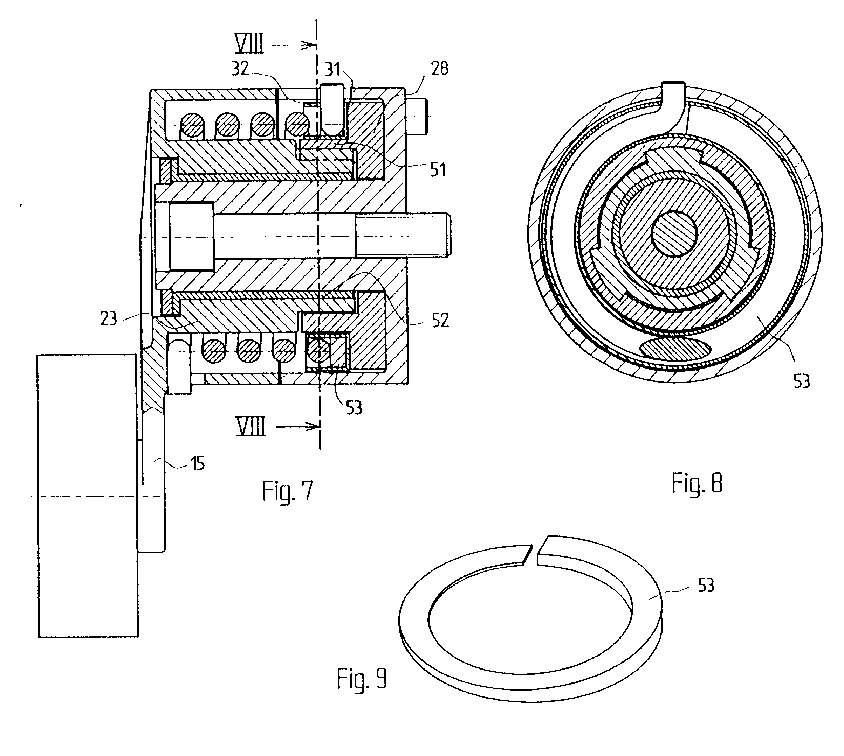

Die in den Fig. 7 und 8 dargestellte Spannvorrichtung weist ebenfalls einen Gegenreibring 31 auf. Dieser Gegenreibring 31 wird über seinen Innenumfang radial auf einem konzentrischen Führungsansatz 51 des Reibkörpers 28 gelagert, wobei durch ein ausreichendes Lagerspiel eine geringfügige radiale Verschiebung des Gegenreibrings 31 gegenüber dem Führungsansatz 51 zuzulassen ist. Bei Vorspannung der Schraubenfeder 13 in Verdrehrichtung stützt sich die Schraubenfeder 13 mit der ersten Federwindung radial auf einem begrenzten Umfangsbereich des Gegenreibrings 31 ab, so daß dieser lokal am Führungsansatz 51 zur Anlage kommt. Aufgrund der Relativbewegung zwischen feststehendem Gegenreibkörper 31 und über den Spannhebel in Umfangsrichtung bewegbaren Reibkörper 28 entstehen bei dieser konstruktiven Variante zusätzliche Reibungsverluste am Außenumfang des Führungsansatzes 51, so daß das Gesamtniveau der Dämpfung nochmals erhöht werden kann.

Fig. 9 zeigt den Schraubenring 53, der gemäß Fig. 7 zwischen Schraubenfeder und Gegenreibring angeordnet ist. Dieser Schraubenring 53 weist auf seinem Umfang eine veränderliche Höhe auf, so daß die Windungssteigung der ersten Wicklung der Schraubenfeder ausgeglichen wird, d.h. die erste Windung liegt axial immer am Schraubenring an. Durch Einsatz des beschriebenen Schraubenrings, der im Einzelfall der jeweiligen Federgeometrie angepaßt werden muß, kann die axiale Verspannung der Schraubenfeder optimal, d.h. ohne Verkantung auf den Gegenreibkörper übertragen werden.

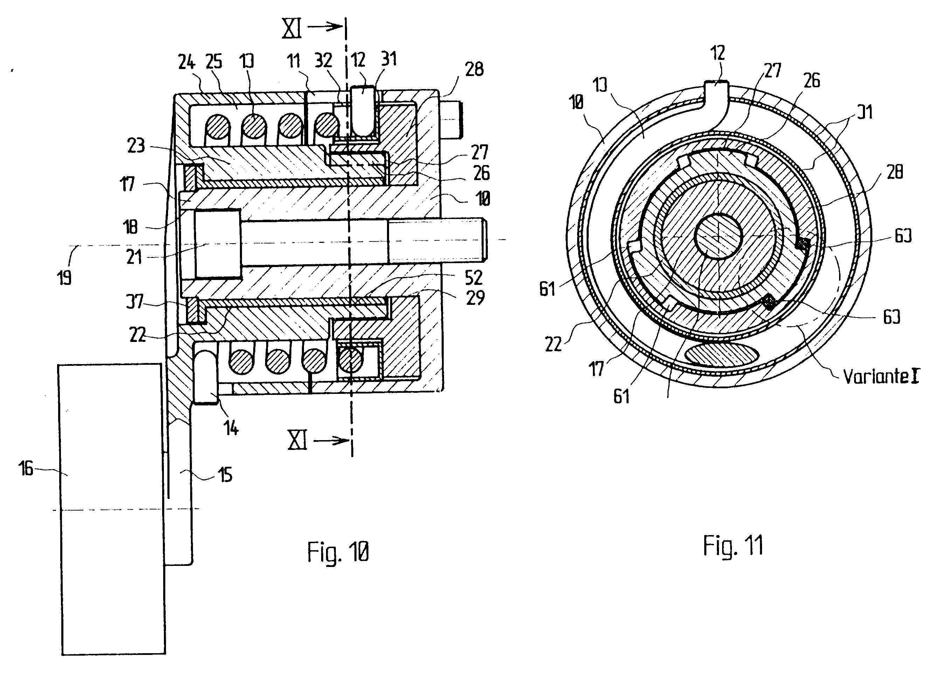

Die in den Fig. 10 und 11 dargestellte Spannvorrichtung weist als Unterschied zu den vorher beschriebenen Ausbildungen Ausnehmungen 27 des Reibkörpers 28 auf, die in Umfangsrichtung größer ausgeführt sind als die hier eingreifenden Mitnehmer 26 des Lagerteils 23 des Spannhebels 15. Dadurch ergibt sich ein durch die Größe der Ausnehmungen definierter Freigang 61 zwischen Reibkörper 28 und Mitnehmer 26. Dieser Freigang 61 wirkt sich bei oszillierenden Drehschwingungen des Lagerteils 23 im besonderen aus. Außerdem wird der Reibkörper 28 mit seiner radialen Innenbohrung 29 auf dem Lagerzapfen 17 des Gehäuses 10 gelagert und weist ein radiales Spiel zu den Mitnehmern 26 auf. Durch diese Ausführung wird eine Relativbewegung zwischen dem Reibkörper 28 und dem Spannhebel 15 in Umfangsrichtung zugelassen, so daß bei geringen Schwingungsamplituden des Spannhebels 15 die Mitnehmer 26 innerhalb der Ausnehmungen 27 schwingen, ohne den Reibkörper 28 zu bewegen. Das Spannsystem arbeitet dann mit einer relativ geringen Dämpfung, die im wesentlichen durch das Gleitlager 22 verursacht wird. Erst bei größeren Amplituden, die zu entsprechenden Drehbewegungen des Lagerteils 23 führen, wird der Reibkörper 28 durch die Mitnehmer 26 ab eines definierten Schwenkwinkels angekoppelt und bringt damit ein zusätzlich abbremsend wirkendes Moment auf den Spannhebel auf.

Die hohe Dämpfung dieser Spannvorrichtung setzt erst bei einer durch die Größe des Freiganges 61 definierten Schwingungsamplitude des Spannhebels 15 ein und wird somit als Reaktion auf große Schwingungsamplituden aktiviert. Diese großen Spannhebelbewegungen treten in der Regel nur in kritischen Betriebszuständen auf, müssen bei der Auslegung der erforderlichen Dämpfung jedoch berücksichtigt werden. Wird der Spannhebel 15 dagegen nur zu kleinen Schwingungen angeregt, ist auch nur eine geringe Dämpfung erforderlich. Der separate Dämpfungsmechanismus muß hier nicht eingreifen, um die Funktion des Spannsystems sicherzustellen. Da das Spannsystem in der Regel zeitanteilig mehr zu relativ geringen Schwingungsamplituden angeregt wird, wird der Reibkörper 28 entsprechend weniger häufig beansprucht, womit sich ein zeitabhängiger Verschleiß entsprechend reduziert. Zudem wird der Treibriemen in den Betriebsphasen ohne angekoppelten Reibkörper 28 mit weniger großen dynamischen Trumkraftschwankungen, die durch höhe Dämpfungswerte des Spannsystems verursacht werden, belastet. Daraus ergeben sich sowohl Funktions- wie auch Lebensdauervorteile des Riementriebs.

In der in Fig. 11 eingezeichneten Variante I ist ein elastomerer Körper 63 in den Freigang 61 zwischen Mitnehmer 26 und Ausnehmung 27 des Reibkörpers 28 zur Reduzierung der stoßartigen Belastungen auf die entsprechenden Körperflanken eingebracht.

### Bezugszeichenliste

- 10: Gehäuse
- 11: achsparalleles Langloch
- 12: Schenkel
- 13: Schraubenfeder
- 14: Schenkel
- 15: Spannhebel
- 16: Spannrolle
- 17: Lagerzapfen
- 18: Zentralbohrung
- 19: Drehachse
- 21: Befestigungsschraube
- 22: Gleitbuchse
- 23: nabenförmiges Lagerteil
- 24: Abdeckmantel
- 25: kreisringförmiger Raum
- 26: Mitnehmer
- 27: Ausnehmungen
- 28: Reibkörper
- 29: Mittelbohrung
- 31: Gegenreibring
- 32: Schlitz
- 37: Sicherungsscheibe
- 41: Gegenreibring
- 42: Lasche
- 43: Schlitz
- 51: Führungsansatz
- 52: abgedrehter Abschnitt
- 53: Schraubenring
- 61: Freigang
- 63: elastomerer Körper

## Patentansprüche

1. Vorrichtung zum Spannen von Treibriemen oder Antriebsketten mit einer auf Verdrehung vorgespannten Schraubenfeder (13) zum Anpressen eines in einem Gehäuse (10) auf einer Drehachse (19) drehbar gelagerten Spannhebels (15) gegen den Riemen oder die Kette und mit einer Dämpfungsanordnung, die bei Schwenkbewegungen des Spannhebels (15) wirksam wird, wobei ein auf einem nabenförmigen Lagerteil (23) des Spannhebels (15) drehfest, aber axial verschiebbar angeordneter Reibkörper (28) um die Drehachse (19) verdreht wird und gegen das feststehende Gehäuse (10) von der Schraubenfeder (13) axial gepreßt wird,
**dadurch gekennzeichnet**,
daß zwischen dem Ende der Schraubenfeder (13) und dem Reibkörper (28) ein axial verschiebbarer Gegenreibring (31) angeordnet ist, der gegenüber dem Gehäuse (10) verdrehgesichert ist und von der Schraubenfeder (13) axial gegen den Reibkörper (28) gepreßt wird.

2. Vorrichtung nach Anspruch 1, dadurch gekennzeichnet, daß eine Ausnehmung (27) des Reibkörpers (28) in einem konzentrischen Führungsansatz (51) des Reibkörpers (28) ausgebildet ist.

3. Vorrichtung nach Anspruch 1, dadurch gekennzeichnet, daß der Gegenreibring (31) einen U-förmigen Kreisringquerschnitt aufweist, wobei die radial äußere Wand des Kreisringes mit einem Schlitz (32) versehen ist, durch den der Schenkel (12) der Schraubenfeder (13) in ein achsparalleles Langloch (11) des Gehäuses (10) ragt.

4. Vorrichtung nach Anspruch 3, dadurch gekennzeichnet, daß der Schlitz (43) eine radial nach außen abstehende Lasche (42) aufweist, die in ein Langloch (11) des Gehäuses (10) ragt.

5. Vorrichtung nach Anspruch 2, gekennzeichnet durch folgende Merkmale:
- der Führungsansatz (51) erstreckt sich axial über das Ende des Lagerteils (23) des Spannhebels (15),
- der Gegenreibring (31) ist in diesem Bereich den Führungsansatz (51) mit ausreichendem Spiel umfassend und mit seiner äußeren Radialwand passend im Gehäuse (10) angeordnet.

6. Vorrichtung nach Anspruch 2, dadurch gekennzeichnet, daß der Gegenreibring (31) mit Spiel im Gehäuse (10) und zum Führungsansatz (51) angeordnet ist.

7. Vorrichtung nach einem der Ansprüche 1 bis 6, dadurch gekennzeichnet, daß ein Schraubenring (53) zwischen dem Boden der Schraubenfeder (13) und dem Gegenreibring (31) angeordnet ist, der durch seine ansteigende Höhe die Wicklungssteigung der Schraubenfeder (13) kompensiert.

8. Vorrichtung nach einem der Ansprüche 1 bis 7, dadurch gekennzeichnet, daß die Ausnehmung bzw. Ausnehmungen (27) des Reibkörpers (28) in Umfangsrichtung größer sind als der bzw. die eingreifenden Mitnehmer (26) des Lagerteils (23), so daß ein definierter Freigang (61) zwischen Reibkörper (28) und Lagerteil (23) vorhanden ist.

9. Vorrichtung nach Anspruch 8, dadurch gekennzeichnet, daß in den Freigang (61) ein elastomerer Körper (63) angeordnet ist.

## Claims

1. Apparatus for tensioning transmission belts or drive chains, having a helical spring (13), which is initially tensioned to prevent torsion, for pressing a tensioning lever (15) against the belt or the chain, which lever is rotatably mounted in a housing (10) on an axis of rotation (19), and said apparatus having a vibration damping arrangement which becomes operative if the tensioning lever (15) effects pivotal movements, a friction body (28) being non-rotatably, but axially displaceably, disposed on a hub-shaped bearing member (23) of the tensioning lever (15), which friction body is pivoted about the axis of rotation (19) and is axially pressed against the fixed housing (10) by the helical spring (13), characterised in that an axially displaceable counterfriction ring (31) is disposed between the end of the helical spring (13) and the friction body (28), which ring is prevented from pivoting relative to the housing (10) and is axially pressed against the friction body (28) by the helical spring (13).

2. Apparatus according to claim 1, characterised in that a recess (27) of the friction body (28) is provided in a concentric guide extension member (51) of the friction body (28).

3. Apparatus according to claim 1, characterised in that the counterfriction ring (31) has a U-shaped circular cross-section, the radially outer wall of the circle being provided with a slot (32), through which the leg (12) of the helical spring (13) protrudes into an axis-parallel elongate hole (11) in the housing (10).

4. Apparatus according to claim 3, characterised in that the slot (43) has a radially outwardly protruding lug (42), which projects into an elongate hole (11) in the housing (10).

5. Apparatus according to claim 2, characterised by the following features:
- the guide extension member (51) extends axially over the end of the bearing member (23) of the tensioning lever (15); and
- the counterfriction ring (31) is disposed in this region so as to surround the guide extension member (51) with sufficient clearance and is disposed in the housing (10) so as to fit with its outer radial wall.

6. Apparatus according to claim 2, characterised in that the counterfriction ring (31) is disposed in the housing (10) with some clearance from the guide extension member (51).

7. Apparatus according to one of claims 1 to 6, characterised in that a helical ring (53) is disposed between the base of the helical spring (13) and the counterfriction ring (31), which helical ring compensates for the coil pitch of the helical spring (13) by its increasing height.

8. Apparatus according to one of claims 1 to 7, characterised in that the recess or recesses (27) of the friction body (28) are greater, when viewed with respect to the circumferential direction, than the engaging entrainment means (26) of the bearing member (23), so that there is a specific clear passageway (61) between the friction body (28) and the bearing member (23).

9. Apparatus according to claim 8, characterised in that an elastomeric body (63) is disposed in the clear passageway (61).

## Revendications

1. Dispositif de tension de courroies de transmission ou de chaînes d'entraînement, comportant un ressort hélicoïdal (13) précontraint en rotation et servant à repousser un levier de tension (15), monté de manière à pouvoir tourner autour d'un axe de rotation (19) dans un boîtier (10), contre la courroie ou la chaîne et comportant un dispositif d'amortissement, qui agit lors de mouvements de basculement du levier de tension (15), et dans lequel un corps de frottement (28), disposé d'une manière solidaire en rotation, mais avec possibilité de déplacement axial, sur un élément de palier en forme de moyeu (23) du levier de tension (15), tourne autour de l'axe de rotation (19) et est repoussé axialement par le ressort hélicoïdal (13) contre le boîtier fixe (10), caractérisé en ce qu'entre l'extrémité du ressort hélicoïdal (13) et le corps de frottement (28) est disposée une bague de frottement antagoniste (31) déplaçable axialement, qui est bloquée contre toute rotation par rapport au boîtier (10) et est repoussée axialement par le ressort hélicoïdal (13) contre le corps de frottement (28).

2. Dispositif selon la revendication 1, caractérisé en ce qu'un évidement (27) du corps de frottement (28) est formé dans un embout de guidage concentrique (51) du corps de frottement (28).

3. Dispositif selon la revendication 1, caractérisé en ce que la bague de frottement antagoniste (31) possède une section transversale d'anneau circulaire en forme de U, la paroi extérieure du point de vue radial de l'anneau circulaire étant pourvue d'une fente (32), dans laquelle la branche (12) du ressort hélicoïdal (13) pénètre dans un trou allongé (11), parallèle à l'axe, du boîtier (10).

4. Dispositif selon la revendication 3, caractérisé en ce que la fente (43) possède une patte (42) qui fait saillie radialement vers l'extérieur et pénètre dans un trou allongé (11) du boîtier (10).

5. Dispositif selon la revendication 2, caractérisé par les caractéristiques suivantes :
- l'embout de guidage (51) s'étend axialement au-delà de l'extrémité de l'élément de palier (23) du levier de tension (15),
- la bague de frottement antagoniste (31) enserre, dans cette zone, l'embout de guidage (51) avec un jeu suffisant et sa paroi radiale extérieure est disposée d'une manière ajustée dans le boîtier (10).

6. Dispositif selon la revendication 2, caractérisé en ce que la bague de frottement antagoniste (31) est disposée avec jeu dans le boîtier (10) et par rapport à l'embout de guidage (52).

7. Dispositif selon l'une des revendications 1 à 6, caractérisé en ce qu'une bague hélicoïdale (53) est disposée entre le fond du ressort hélicoïdal (13) et la bague de frottement antagoniste (31) et compense, par sa hauteur croissante, le pas d'enroulement du ressort hélicoïdal (13).

8. Dispositif selon l'une des revendications 1 à 7, caractérisé en ce que le ou les évidements (27) du corps de frottement (28) ont une étendue, dans la direction circonférentielle, supérieure à celle du ou des organes d'entraînement (26) de l'élément de palier (23) qui s'engage dans ce ou ces évidements, de sorte qu'il existe un interstice défini (61) entre le corps de frottement (28) et l'élément de palier (23).

9. Dispositif selon la revendication 8, caractérisé en ce qu'un corps élastomère (63) est disposé dans l'interstice (61).
